# DEMANDE DE BREVET EUROPEEN

(11) **EP 3 179 559 A1**
(43) Date de publication de la demande: **14.06.2017**
(21) Numéro de dépôt: 16202740.3
(22) Date de dépôt: 07.12.2016
(51) Int. Cl.: H01Q 21/00, H01Q 21/06, H01Q 5/42, G01S 13/74, G01S 13/87

(54) **ANTENNE ACTIVE MODULAIRE BI-BANDE**

(30) Priorité: 09.12.2015 FR 1502558
(71) Demandeur: Thales, 92400 Courbevoie (FR)
(72) Inventeur: Maas, Olivier, 91190 Gif sur Yvette (FR)
(74) Mandataire: Priori, Enrico

(57) **Abrégé**

Panneau d'antenne bi-bande comprenant une pluralité de cellules rayonnantes bi-bandes (HB1) fonctionnant de manière indépendante pour une première fréquence dans une première bande de fréquence et une deuxième fréquence dans une deuxième bande de fréquence, la première bande de fréquences étant plus haute que la deuxième bande de fréquences, chacune desdites cellules rayonnantes présentant un accès distinct à la première et à la deuxième fréquence, le panneau d'antenne étant caractérisé en ce que les cellules rayonnantes sont disposées selon une maille dimensionnée par rapport à la première bande de fréquences, et en ce que les accès vers la deuxième fréquence des cellules rayonnantes sont rassemblés par paquets au sein de combineurs ayant un accès unique.

## Description

La présente invention se situe dans le domaine des dispositifs rayonnants conçus pour opérer dans deux bandes de fréquences distinctes. Elle s'applique notamment aux antennes à balayage électronique utilisés par des radars à balayages électroniques pour la surveillance de l'espace aérien. Ces radars opèrent généralement en bande S et dans la bande dédiée aux applications IFF (acronyme anglais pour « Interrogation Friend or Foe », ou interrogation ami ennemi), et utilisent des composants en technologie imprimée (aussi connue en anglais sous le terme de microstrip).

Les radars à balayage électronique de l'état de l'art sont constitués d'antennes directives réalisées à partir d'éléments rayonnants, ou cellules rayonnantes, assemblés au sein d'un réseau. La modification de l'amplitude et de la phase de chacun des éléments rayonnants du réseau permet d'orienter la direction du faisceau radar.

Les fréquences d'intérêt pour les applications de surveillance aérienne sont la bande S, utilisée pour le radar primaire, et en particulier la sous-bande 2.9GHz à 3.3GHz, ainsi que des bandes de fréquences de quelques MHz ou dizaines de MHz situées autour des fréquences 1.03GHz et 1.09GHz, et utilisées pour les applications IFF. Les équipements radars actuels, qu'il s'agisse de radars au sol ou de radars embarqués sur un porteur comme par exemple un véhicule, un navire ou un avion, comprennent généralement deux systèmes indépendants : une antenne directive rotative dédiée aux applications IFF et un réseau de cellules rayonnantes pour le radar Bande S. L'antenne rotative est positionnée au-dessus ou à côté de l'antenne radar bande S. Les deux volumes s'ajoutent donc, ce qui peut poser problème lors du transport ou de l'installation des antennes.

Le problème technique posé consiste donc à implémenter, au sein d'une unique ouverture rayonnante, deux réseaux rayonnants distincts fonctionnant dans des bandes de fréquences différentes, en particulier la bande S et la bande dédiée aux applications IFF. Les réseaux doivent chacun avoir des points d'accès distincts permettant de commander indépendamment en phase (et de manière optionnelle en amplitude) chacun de ses éléments rayonnants, et de piloter ainsi indépendamment le pointage de chacun des faisceaux radar.

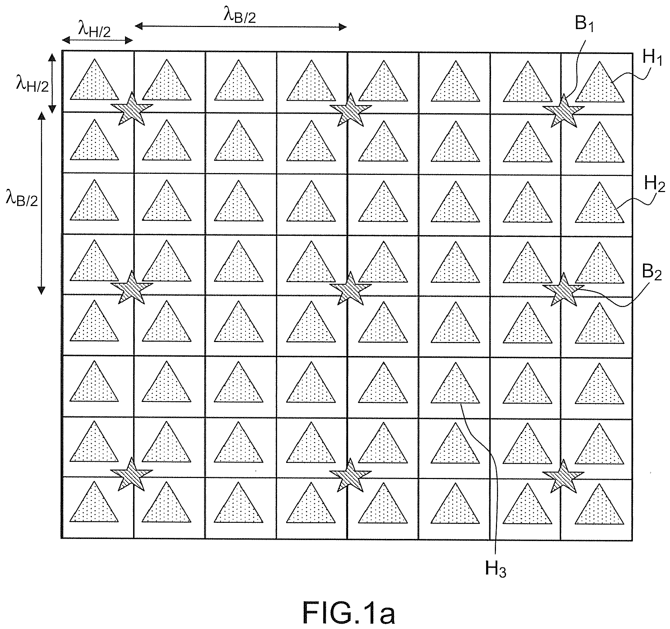

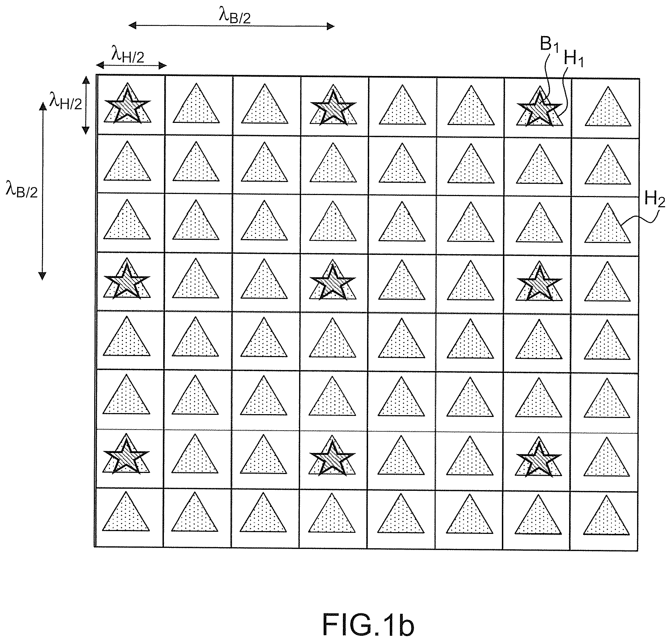

Il est connu de l'état de l'art des solutions telles que celles représentées en Figure 1a et 1b, détaillées par la suite, permettant de réaliser un réseau rayonnant bi-bande. Ces solutions consistent à insérer, dans une maille conçue pour les éléments dédiés à la bande de fréquence la plus haute, des éléments dédiés à la bande de fréquence la plus basse selon une maille propre à ces fréquences, soit en les disposants à intervalles réguliers entre les éléments de la maille haute (figure 1a), soit en les superposant à ces éléments (figure 1 b).

Si ces solutions répondent au problème de l'encombrement du réseau, elles ne sont pas optimales en termes de performances. En effet, les éléments rayonnants du réseau à la fréquence haute n'évoluent pas tous dans le même environnement, certains étant plus perturbés que d'autres par la présence des éléments du réseau à la fréquence basse, ce qui génère des perturbations non régulières préjudiciables au bon fonctionnement du radar.

L'invention répond au problème posé en décrivant un panneau d'antenne active dont la face rayonnante comprend des cellules rayonnantes bi-bandes, disposées selon une maille propre à la bande de fréquence la plus haute. Les éléments rayonnants propres à chaque bande de fréquences qui composent ces cellules fonctionnent alors tous dans le même environnement, évitant ainsi les perturbations liées aux interférences hétérogènes sur les éléments du réseau. Les éléments rayonnants des cellules associés à la bande de fréquences la plus basse se trouvent alors en surnombre. Pour éviter que ce surnombre n'engendre un coût supplémentaire sur les modules radio nécessaires à l'émission et la réception du signal, le panneau d'antenne comprend une deuxième couche dans laquelle est implémenté un réseau de combineurs. Les combineurs regroupent par paquets les voies associées à la fréquence basse, de manière à recréer une maille proche de la maille adaptée à la bande de fréquences basse. Ces combineurs permettent également de limiter le nombre d'accès aux composants bande basse, de manière à ce que l'interface avec les modules d'émission et de réception existants du radar ne nécessite pas d'adaptations.

Afin de résoudre ce problème technique, un panneau d'antenne bi-bande comprenant une pluralité de cellules rayonnantes bi-bandes, chacune de ces cellules fonctionnant de manière indépendante pour une première fréquence dans une première bande de fréquence et une deuxième fréquence dans une deuxième bande de fréquence, la première bande de fréquences étant plus haute que la deuxième bande de fréquences, est décrit ici. Les cellules rayonnantes qui composent le panneau d'antenne présentent un accès distinct à la première et à la deuxième fréquence, et sont disposées selon une maille dimensionnée par rapport à la première bande de fréquences, les accès vers la deuxième fréquence des cellules rayonnantes étant rassemblés par paquets au sein de combineurs ayant chacun un accès unique.

Avantageusement, les cellules rayonnantes comprennent un élément rayonnant dimensionné pour rayonner dans la première bande de fréquence associé à un élément de filtrage de la deuxième bande de fréquence, et un élément rayonnant dimensionné pour rayonner dans la deuxième bande de fréquence associé à un élément de filtrage de la première bande de fréquence.

Avantageusement, l'ensemble des cellules rayonnantes sont identiques.

Dans un mode de réalisation préférentiel du panneau d'antenne bi-bande selon l'invention, chaque maille du panneau rayonnant a un pas de taille sensiblement égale à λ_{H}/2, λ_{H} étant une longueur d'onde associée à la fréquence maximale de la première bande de fréquences.

Dans un mode de réalisation du panneau d'antenne bi-bande selon l'invention, le nombre d'accès vers la deuxième fréquence des cellules rayonnantes rassemblés au sein d'un combineur est un entier proche du rapport entre la première fréquence et la deuxième fréquence.

Dans un autre mode de réalisation du panneau d'antenne bi-bande selon l'invention, le nombre d'accès vers la deuxième fréquence des cellules rayonnantes rassemblés au sein d'un combineur est un entier sensiblement égal à la puissance de deux la plus proche du rapport entre la première fréquence et la deuxième fréquence.

Avantageusement, les accès vers la deuxième fréquence des cellules rayonnante rassemblés au sein d'un combineur sont des accès adjacents formant des polygones réguliers.

Dans un mode de réalisation du panneau d'antenne bi-bande selon l'invention, le panneau d'antenne bi-bande est un circuit multicouches comprenant :
- une face supérieure comprenant la pluralité de cellules rayonnantes,
- une couche interne comprenant un réseau de combineurs reliés à des accès à la deuxième bande de fréquence des cellules rayonnantes,
- une face arrière comprenant un réseau de connecteurs,
- des lignes reliant l'accès à chacun des combineurs du réseau de combineurs à un connecteur associé à la deuxième bande de fréquence du réseau de connecteurs, et
- des lignes reliant l'accès à la première bande de fréquence des cellules rayonnantes à un connecteur associé à la première bande de fréquence du réseau de connecteurs.

Dans un mode de réalisation du panneau d'antenne bi-bande selon l'invention, la première bande de fréquence comprend la bande 2.9GHz - 3.3GHz, et la deuxième bande de fréquence est centrée autour d'une fréquence choisie parmi la fréquence 1030MHz et la fréquence 1090MHz.

Dans un autre mode de réalisation du panneau d'antenne bi-bande selon l'invention, la première bande de fréquence comprend la bande 2.9GHz - 3.3GHz, et la deuxième bande de fréquence comprend au moins la fréquence 1030MHz et la fréquence 1090MHz.

L'invention consiste également en une structure bi-bande d'accueil d'un panneau d'antenne. Cette structure est caractérisée en ce qu'elle est configurée pour accueillir un panneau d'antenne bi-bande selon l'une des revendications précédentes, et en ce qu'elle comprend une pluralité de modules d'émission réception associés à la première bande de fréquence, et une pluralité de modules d'émission réception associés à la deuxième bande de fréquence.

Enfin, l'invention adresse une antenne radar bi-bande caractérisée en ce qu'elle comprend un panneau d'antenne bi-bande tel que décrit précédemment, et une structure bi-bande d'accueil telle que décrite précédemment, ladite structure bi-bande d'accueil étant reliée audit panneau d'antenne.

### Description

L'invention sera mieux comprise et d'autres caractéristiques et avantages apparaîtront mieux à la lecture de la description qui suit, donnée à titre non limitatif, et grâce aux figures annexées parmi lesquelles :
- Les figures 1a et 1b présentent différents maillages d'un réseau rayonnant selon l'état de l'art,
- Les figures 2a et 2b présentent différents modes de réalisation d'une cellule rayonnante bi-bande permettant de mettre en oeuvre l'invention,
- La figure 3 présente le maillage d'un réseau rayonnant selon un premier mode de réalisation de l'invention,
- Les figures 4a et 4b présentent différents modes de réalisation d'un réseau de combineurs selon l'invention,
- La figure 5 présente un exemple de structure d'accueil associée à un mode de réalisation d'une antenne selon l'invention.

Elle est présentée de manière à répondre au besoin émis par les applications radars sol et naval, et pour cela adresse la problématique de l'utilisation conjointe d'un radar primaire en bande S, et plus particulièrement dans la sous bande 2.9GHz-3.3GHz, et d'un radar secondaire IFF, visant en particulier à travailler autour des fréquences 1.03GHz et 1.09GHz. Cependant, l'invention s'applique de manière identique quelles que soient les applications et les bandes de fréquences envisagées, en adaptant pour cela le maillage des différents réseaux d'antennes aux bandes de fréquences.

Dans un réseau rayonnant utilisé pour faire du balayage électronique en deux dimensions, chaque élément rayonnant occupe une surface appelée maille rayonnante, dont le pas est voisin de λ/2, avec λ la fréquence maximale de la bande de fréquence envisagée.

La figure 1a présente le maillage d'un réseau rayonnant selon l'état de l'art. L'antenne active du radar primaire, qui évolue à la fréquence la plus élevée, est constituée par des éléments H rayonnant à la fréquence haute, et disposés selon une maille adaptée à cette bande de fréquence, la maille ayant alors des dimensions proches de λ_{H}/2 x λ_{H}/2, avec λ_{H} la longueur d'onde associée à la fréquence maximale de la bande de fréquences haute. Chacun des éléments rayonnants H peut être piloté en phase, et si nécessaire en amplitude, afin de diriger le diagramme de rayonnement de l'antenne dans la direction souhaitée. Le rendement électrique des voies de puissance, la taille des éléments rayonnants et la taille de la maille rayonnante du réseau, sont alors optimisés pour la bande de fréquence haute.

Le réseau rayonnant constitué des éléments rayonnants fonctionnant à la fréquence haute forme le maillage le plus serré, dans lequel viennent s'insérer des éléments B, rayonnant dans la bande de fréquence basse. Ils sont disposés à intervalles réguliers selon une deuxième maille rayonnante, ayant des dimensions proches de λ_{B}/2 x λ_{B}/2, avec λ_{B} la longueur d'onde associée à la fréquence maximale de la bande de fréquences basse. Dans l'exemple proposé, le rapport entre la bande de fréquence basse et la bande de fréquence haute est de trois. Les éléments du deuxième maillage sont alors entrelacés avec les éléments du premier maillage selon un pas trois fois plus grand (λ_{B} = 3.λ_{H}). Dans la figure 1a, les éléments rayonnants dans la bande de fréquence basse sont représentés comme ayant des tailles comparables à celles des éléments rayonnants dans la bande de fréquence haute. En règle générale, ces éléments bande basse ont une taille plus importante que les éléments bande haute, dans une proportion liée au rapport des bandes de fréquence. Cependant, leur représentation à partir de tailles identiques simplifie la compréhension des phénomènes physiques.

La conséquence de l'entrelacement entre les éléments rayonnant dans la bande de fréquence haute et les éléments rayonnant dans la bande de fréquence basse est que les premiers n'évoluent alors plus tous dans le même environnement. En effet, l'élément H₁ est en proximité directe de l'élément B₁. Il sera donc très affecté par les phénomènes de couplage avec cet élément. L'élément H₂ est plus éloigné de l'élément rayonnant dans la bande de fréquence basse le plus proche (B₂). Il sera donc moins affecté par les phénomènes de couplage. Il en est de même pour H₃, qui est à distance importante, et égale, de quatre éléments rayonnant en bande de fréquence basse. Le réseau d'éléments associés à la bande de fréquence haute comporte alors des éléments rayonnants plus ou moins perturbés que d'autres par la présence des éléments de fréquence basse, en fonction de leur position. Les phénomènes de couplage sont d'autant plus importants que le rapport de bande entre les deux fréquences de fonctionnement est proche d'un entier impair. En effet, les éléments rayonnant à la fréquence basse sont dimensionnés par rapport à la longueur d'onde, λ_{B}. Mais, comme λB/2 ≈ 3.λ_{H}/2, ces éléments rayonnent alors également pour la longueur d'onde de la bande de fréquences haute, ce qui amplifie les phénomènes de couplage.

Ces perturbations, accentuées par la régularité de la construction des réseaux, engendrent des remontées de lobes dans le diagramme de rayonnement du réseau à la fréquence haute. Les remontées sont différentes pour chacun des éléments rayonnants en fonction de sa position, elles peuvent alors difficilement être supprimées par calibrage et pré-compensation. Ce défaut est préjudiciable au bon fonctionnement du radar bande haute, dont les performances sont dégradées par rapport aux performances obtenues lorsque les deux radars sont dissociés.

La figure 1b présente un autre mode de réalisation d'un maillage de réseau rayonnant selon l'état de l'art. De manière identique à la figure 1a, l'ensemble des éléments sont représentés comme ayant la même taille dans un souci de simplification. Contrairement à la figure 1a, les éléments rayonnant à la bande de fréquence basse ne sont plus disposés entre les noeuds du réseau, mais superposés aux noeuds du réseau rayonnant à la fréquence haute.

Dans ce mode de réalisation, certains noeuds du réseau rayonnant à la fréquence haute sont occupés par un élément fréquence haute seule (H₂), tandis que d'autres sont occupés par un élément fréquence haute (H₁) auquel se superpose un élément fréquence basse (B₁). A nouveau, la régularité de la perturbation introduite par la présence des éléments rayonnants fréquence basse va dégrader le rayonnement du réseau fréquence haute, et se traduire par des remontées de lobes dans le diagramme de rayonnement et une diminution des performances du radar.

L'invention propose de résoudre les problèmes énoncés ci-dessus en utilisant des cellules rayonnantes bi-bandes, fonctionnant dans deux bandes de fréquences distinctes. Ces cellules rayonnantes comprennent des éléments rayonnant dans chacune des bandes de fréquences, et un accès distinct à chacun de ces éléments, associé à des moyens de filtrage des perturbations générées par le couplage lié à la proximité des éléments.

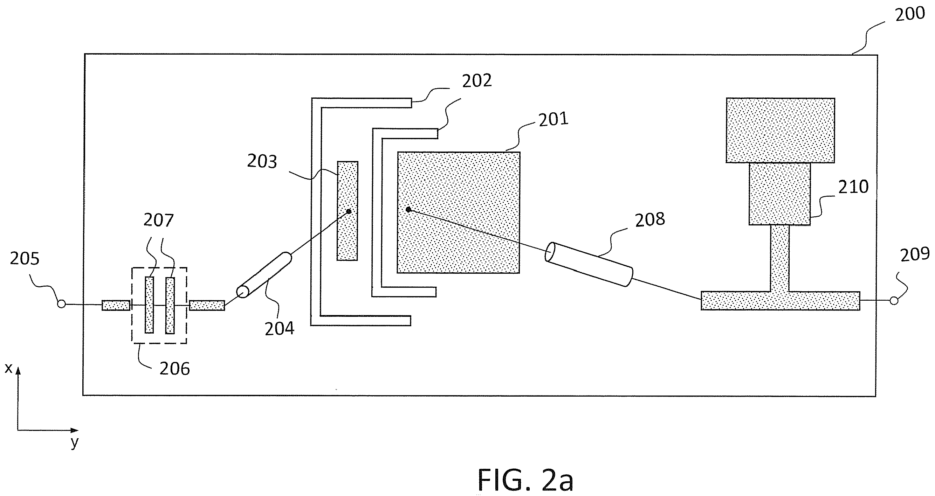

La figure 2a présente une cellule rayonnante bi-bande fonctionnant simultanément dans la bande 2.9GHz - 3.3GHz, et dans la bande IFF, pour laquelle le fonctionnement est optimal autour des fréquences 1030MHz et 1090MHz.

Cette cellule rayonnante 200, ou antenne à éléments rayonnants imprimés, est un circuit imprimé comprenant de multiples couches séparées par un substrat diélectrique, utilisant des éléments distribués, c'est-à-dire des lignes microrubans (désignées aussi par le terme anglais « microstrip »). Cette technologie est très répandue en hyperfréquence car, pour les fréquences élevées, la manipulation des ondes à partir de guides d'ondes est plus simple que la manipulation des courants et tensions. L'une des couches du circuit imprimé forme un plan de masse.

La cellule rayonnante comprend un élément rayonnant 201 de type patch. En éléments distribués, un patch est une couche métallisée de forme carrée ou rectangulaire alimentée. Les dimensions du patch sont choisies afin qu'il rayonne dans la bande de fréquences haute (bande S). Il est positionné dans l'une des couches du circuit.

La cellule rayonnante comprend également deux fentes rayonnantes 202 repliées. Ces fentes ont le comportement de dipôles, tout en étant moins sensibles aux phénomènes de couplage. Elles sont accordées pour fonctionner aux alentours des sous-bandes d'intérêt de la bande de fréquences basse (dans l'exemple, 1030MHz et 1090MHz). Cet accord se fait en les dimensionnant par rapport à la longueur d'onde recherchée, la fente ayant alors une longueur de λ/2. Le nombre de fentes est adapté au nombre de bandes de fréquences basses souhaitées. L'utilisation de deux fentes repliées en U et d'une antenne patch permet de loger les trois éléments rayonnants dans un environnement très réduit.

Les fentes sont réalisées par dé-métallisation partielle du plan de masse de la cellule. L'excitation des fentes est réalisée par un ruban rayonnant 203 positionné entre les deux fentes dans l'un des plans du circuit imprimé, de préférence le plan adjacent au plan de masse, et relié à l'alimentation des fentes. Le positionnement relatif des deux fentes 202 et de l'excitateur 203 crée des phénomènes de couplages, à la fois entre les éléments de la bande de fréquences basse, mais aussi avec le patch 201. Leur positionnement doit donc être ajusté afin de repousser les artefacts générés par ce couplage en dehors des bandes utiles. L'ajustement de l'écart entre les fentes permet d'ajuster la fréquence de résonance de chaque fente et de repousser leur fonctionnement sur la fréquence triple en dehors de la bande de fréquence haute.

L'excitateur 203 est alimenté par l'accès bande de fréquences basse 205, auquel il est relié par une ligne coaxiale 204 et un filtre passe bas 206.

Ce filtre passe bas comprend, par exemple, deux condensateurs 207, qui en technologie imprimée prennent la forme de tronçons de ligne ouverts. Le filtre a pour rôle le filtrage des composantes de la bande de fréquences haute dues au fort couplage entre les fentes et le patch.

L'élément rayonnant de type patch 201 est alimenté par l'accès bande de fréquences haute 209 auquel il est relié par une ligne coaxiale 208 et un filtre 210.

Le filtre 210 a pour rôle le filtrage des composantes de la bande de fréquences basse dues au fort couplage entre les fentes et le patch.

La réalisation d'un filtre passe haut ou passe bande nécessite un enchaînement de capacités séries et d'inductances parallèles difficile à réaliser en technologie distribuée, et dont la taille des composants, liés à la bande de fréquence basse, présente le problème de l'encombrement. Une manière alternative de réaliser un filtre passe bande consiste alors à insérer un ou plusieurs guides d'onde parallèles court-circuités, plus connus sous le nom anglais de stub.

Un guide d'onde parallèle joue le rôle de circuit résonateur série, et présente un encombrement très réduit. Sa longueur est proportionnelle à la longueur d'onde dans le diélectrique de la fréquence qu'il vient court-circuiter. Ainsi, un stub réalisé à partir d'un tronçon de ligne microruban de longueur λ_{B}/4, avec λ_{B} la longueur d'onde de la bande de fréquences basse, jouera le rôle de court-circuit dans sa bande de résonnance. Dans l'exemple, il s'agit de la bande de fréquences basse. Cependant, les structures résonnantes à base de lignes fonctionnent naturellement de la même manière à la fréquence f₀ et pour tous les multiples impairs de cette fréquence. C'est le cas dans l'exemple, où le rapport des bandes de fréquences est de 3. Ainsi, un tel stub jouera également le rôle de court-circuit pour la bande de fréquences haute.

Ce problème est résolu en implémentant un stub dont la longueur totale est fractionnée en plusieurs tronçons d'impédances différentes (connu en anglais sous le terme de « stepped impedance ») variable. Un tel stub est dispersif. Il est dimensionné de manière à présenter un court-circuit sur sa fréquence fondamentale, et un circuit ouvert sur sa fréquence triple. Le filtre 210 de la figure 2a présente un tel stub, constitué de plusieurs tronçons de ligne microruban de largeurs différentes, et présentant donc plusieurs impédances distinctes. Dans l'exemple, il présente trois impédances différentes, mais le nombre de tronçons est un paramètre propre à chaque implémentation. Du fait des impédances variables, le système n'est pas homogène, sa longueur électrique ne dépend plus linéairement de la fréquence. Sa taille étant de λ_{B}/4, il est accordé pour bloquer les composantes dans la bande de fréquences basse, mais n'est plus adapté à la longueur électrique 3.λ_{H}/4. Il réalise alors bien les fonctions recherchées de filtrage des composantes de la bande de fréquences basse tout en laissant passer les composantes de la bande de fréquences haute.

Les différents éléments constituant la cellule sont disposés dans différentes couches du circuit imprimé, les fentes pouvant être positionnées dans le plan de masse.

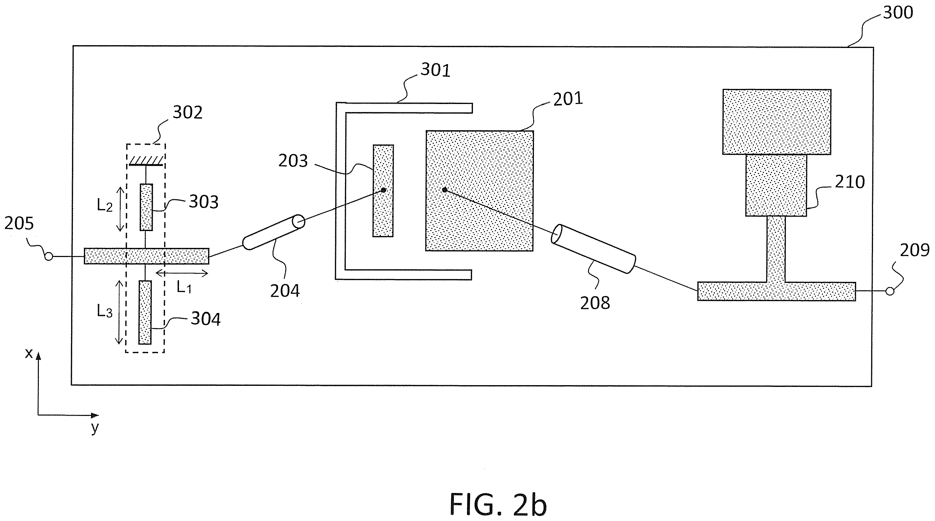

Une variante de réalisation de la cellule rayonnante est représentée dans la figure 2b. Dans cette variante, le nombre de sous-bandes dans la bande de fréquences basse est limité à deux.

De manière identique à ce qui est présenté pour la figure 2a, la cellule rayonnante 300 comprend un élément rayonnant 201 de type patch accordé à la bande de fréquences supérieure. Cet élément rayonnant est alimenté par la sortie bande haute 209 à laquelle il est relié par le biais d'une ligne coaxiale 208 lui permettant de traverser les différentes couches du circuit imprimé, et d'un filtre 210 réalisé sous la forme d'un stub présentant plusieurs tronçons d'impédance variable, permettant de filtrer la bande de fréquences basse tout en étant passant pour la bande de fréquences haute. Avantageusement, un second élément de type patch, identique au premier, peut être superposé au premier élément de type patch 201, pour élargir la bande passante dans la bande de fréquences haute.

La principale différence entre cette cellule et celle présentée précédemment consiste en ce qu'elle ne contient qu'un élément unique de type fente 301, replié en U, et positionné pour se trouver dégagé par rapport au masquage que représentent le ou les patchs 201. La bande de fonctionnement de cet élément est alors élargie à l'ensemble de la bande de fréquences basse, afin de comprendre les deux sous-bandes requises par les applications IFF, par l'association d'un résonateur 302. La fente rayonnante, qui forme un résonateur parallèle, peut être complétée par un résonateur série placé dans le plan de sortie, ou par un résonateur parallèle placé un quart d'onde plus loin. Le résonateur 302 est alors placé à une distance L₁ du connecteur 204 le reliant à l'excitateur 203 de la fente, L₁ valant λ/4, où λ est la longueur d'onde centrale de la bande de fréquences basse.

La fente 301 n'est pas accordée à l'une des sous-bandes de la bande de fréquences basse, mais à la fréquence centrale, soit dans le cas de l'exemple choisi, la fréquence 1.06GHz. Le résonateur 302 est également conçu pour résonner à cette fréquence centrale. L'action sur le couplage entre ces deux éléments, c'est à dire la désadaptation créée entre ces deux éléments, va les faire résonner autour des fréquences recherchées. Le couplage entre les deux éléments est ajusté en faisant varier la position de l'excitateur 203 de la fente. La fente 301, le circuit résonateur 302 et l'excitateur 203 sont donc dimensionnés et positionnés afin que l'ensemble résonne autour des fréquences 1030MHz et 1090MHz, tout en autorisant une forte désadaptation dans la zone de fréquence intermédiaire. L'élément rayonnant ainsi obtenu est bi-fréquence. Cette approche offre l'avantage de n'introduire qu'une seule fente rayonnante dans la cellule, et de réduire les interférences entre la fente et le patch, et donc les phénomènes de couplage en la bande de fréquences basse et la bande de fréquences haute. Le positionnement de la fente 301 et de l'excitateur 203 est donc simplifié par rapport à l'élément présenté dans la figure 2a.

Dans la figure 2b, le circuit résonateur 302 est de type capacité et inductance parallèles. L'inductance 303 est de faible valeur. Elle est réalisée sous la forme d'une ligne microruban de longueur L₂ connectée à la masse. Le condensateur 304 est réalisé sous la forme d'une ligne microruban court-circuitée de longueur L₃, L₃ étant très supérieure à L₂.

Avantageusement, un filtre passe bas semblable au filtre 206 représenté en figure 2a peut être ajouté pour filtrer les composantes des bandes hautes liées au couplage entre la fente et le patch. Un tel filtre n'est cependant pas indispensable, le circuit résonateur réalisant naturellement le rôle de filtre passe bas.

Dans cet exemple, la diminution du nombre d'éléments rayonnants (fentes) est compensée par un effort supplémentaire sur le circuit hyperfréquence d'adaptation de la fente.

D'autres modes de réalisation d'une telle cellule rayonnante, adaptés à d'autres bandes de fréquences, sont possibles, comme par exemple celui décrit dans l'article « A dual band quasi-magneto-electric patch antenna for X-band Phased array », de S.E. Valavan et al., Proceedings of the 44th European Microwave Conference, Octobre 2014. Dans cet article, une cellule rayonnante bi-bande est réalisée en associant une antenne patch pour la bande de fréquences haute et une fente repliée en forme de U gravée dans la métallisation du patch pour la bande de fréquences basse.

L'utilisation de ces cellules dans une structure telle que celle présentée dans la figure 1b, en alternance avec des éléments propres à la bande de fréquence haute, ne résout pas le problème des interférences générées par la non homogénéité du réseau, l'élément rayonnant bi-bande n'ayant pas exactement les mêmes caractéristiques (gain, diagramme de rayonnement) en bande haute que l'élément rayonnant spécifique à la bande haute.

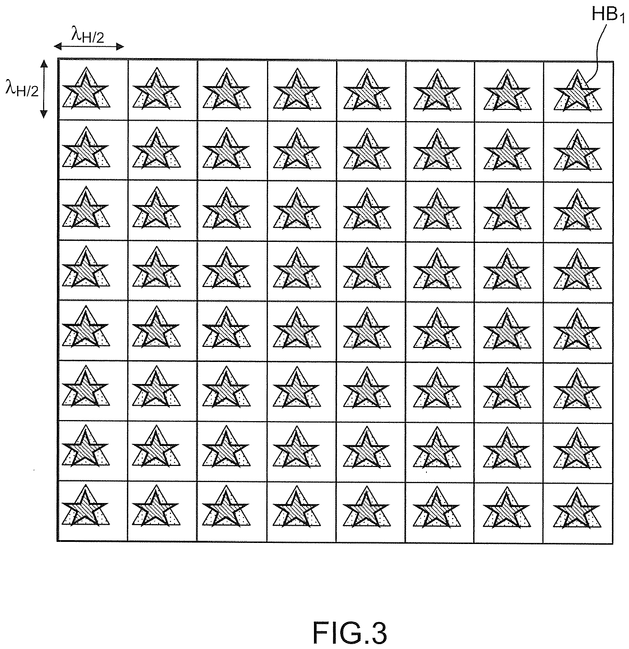

L'invention propose alors de modifier la répartition des cellules rayonnantes. La figure 3 présente le maillage d'un réseau rayonnant selon un premier mode de réalisation de l'invention, dans lequel la maille est dimensionnée par rapport à la fréquence haute (proche de λ_{H}/2 x λ_{H}/2), et qui est composée uniquement de cellules rayonnantes bi-bande (HB₁) présentant un accès distinct à chacune des bandes de fréquence.

Un tel réseau ne présente pas de défaut de périodicité entre les éléments bandes basse et les éléments bande haute, pour les raisons suivantes :
- il ne mélange pas des éléments bande haute et des éléments bande basse, mais utilise un élément unique bi-bande, supprimant ainsi les problèmes de couplage entre éléments,
- la disposition des cellules bi-bande dans le réseau rayonnant est uniforme. Chaque cellule rayonnante, quelle que soit sa fréquence de fonctionnement, voit toujours le même environnement (excepté sur les bords du réseau).

L'invention consiste donc en un panneau rayonnant ayant une face rayonnante constituée d'un seul réseau de cellules rayonnantes bi-bandes dont le pas est ajusté par rapport à la fréquence maximale. Ce pas est optimal pour la fréquence haute, mais sur-optimal pour la fréquence basse qui se trouve alors sur-échantillonnée. Ce sur-échantillonnage se traduit en une augmentation du nombre d'équipements radio à mettre en oeuvre pour réaliser les traitements radars, et engendre un investissement dont le coût peut être pénalisant et une incompatibilité avec les équipements existants.

Pour remédier à ce problème, un des aspects de la solution proposée consiste à ajouter un réseau de combineurs, dont le rôle est de regrouper en phase un nombre N d'accès à la fréquence basse des cellules rayonnantes pour reconstituer un élément équivalent de surface plus grande, et à connecter cette voie formée à un module d'émission/réception fréquence basse. De ce fait, en sortie de chaque cellule rayonnante, se trouve une connexion directe vers un module d'émission/réception bande haute, et une connexion vers un combineur lui-même relié à un module d'émission/réception bande basse. Le combineur peut être comparé à un coupleur ou un sommateur dans un sens, et à un diviseur dans l'autre sens.

Le nombre de modules d'émission/réception fréquence basse peut être optimal en choisissant des combineurs dont le nombre de voies est égal au rapport entre la fréquence haute et la fréquence basse, ou à défaut entre la fréquence maximale de la bande de fréquences haute et la fréquence maximale de la bande de fréquences basse.

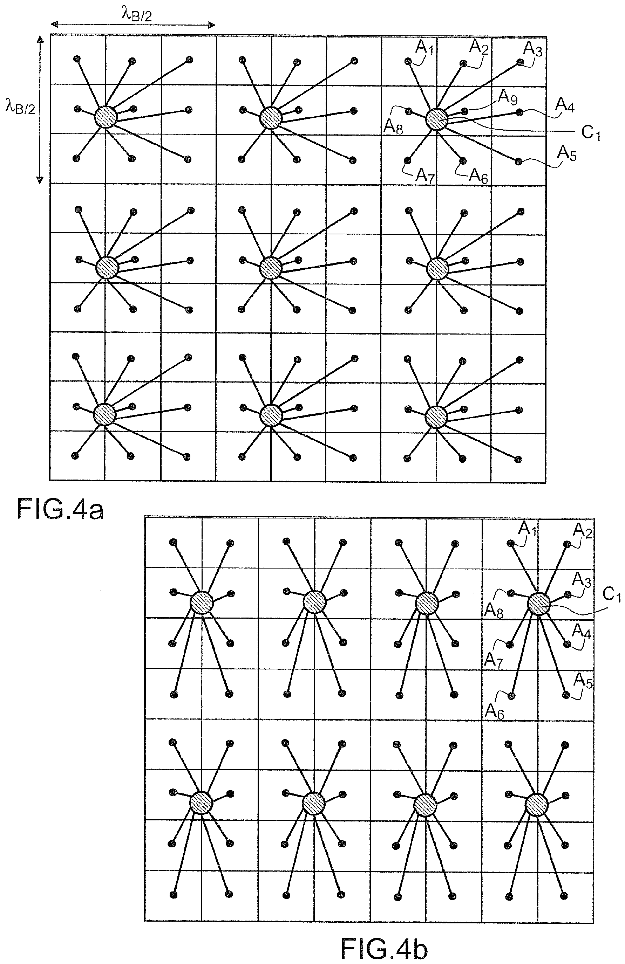

La figure 4a présente un mode de réalisation d'un réseau de combineurs selon l'invention, en adéquation avec le besoin d'un fonctionnement distinct en bande S et dans la bande dédiée aux applications IFF. Dans ce cas, le rapport de fréquence entre la bande haute et la bande basse vaut neuf. Les accès à la bande de fréquence basse des cellules rayonnantes sont rassemblés par paquets de neuf accès adjacents A₁ à A₉ au sein d'un combineur C₁ présentant un accès unique, de manière à définir une nouvelle maille dont les dimensions sont celles de la maille adaptée à la bande de fréquence haute. L'élément rayonnant équivalent fréquence basse ainsi reconstitué couvre une maille proche de λ_{B}/2 x λ_{B}/2.

Les éléments associés à la bande haute et à la bande basse ont un gain qui vaut au maximum 4 * *π* * *Sₘₐᵢₗₗₑ*/*λ*², Sₘₐᵢₗₗₑ étant ici la surface de la maille associée à la bande de fréquence haute. De ce fait, l'élément associé à la bande de fréquences haute possède un gain nominal voisin de 5dB, tandis que l'élément rayonnant équivalent associé à la bande de fréquence basse possède un gain qui est réduit d'un rapport 9, soit un gain de l'ordre de -4.5dB.

A noter que la maille n'est pas nécessairement de forme carrée, elle peut prendre une forme triangulaire ou hexagonale, par exemple.

Dans l'exemple, les combineurs sont disposés au niveau du centre géométrique de l'élément équivalent, mais la position de ces combineurs est libre, tant que la liaison entre les combineurs (par exemple C1) et les différents accès à la bande de fréquence basse des cellules rayonnantes qu'ils desservent (par exemple A1 à A9) se fait par des lignes dont la taille est identique, afin de ne pas introduire de déphasages entre les différents accès.

L'invention s'applique de manière identique lorsque le rapport entre la fréquence haute et la fréquence basse n'est pas un entier. Dans ce cas, le combineur utilisé est alors choisi pour être un combineur N vers 1, pour lequel N est un entier proche du rapport des fréquences, et de préférence inférieur à ce rapport. De manière avantageuse, N peut également être une puissance de 2 proche du rapport des fréquences, de préférence immédiatement inférieure, rendant ainsi le combineur compatible avec la plupart des combineurs commercialisés, ou d'un réseau de combineurs 2 vers 1 cascadés.

Les performances du panneau rayonnant selon l'invention sont optimales en basse fréquence lorsque le nombre N d'accès basse fréquence de cellules rayonnantes regroupés en phase au sein des combineurs est égal au rapport entre la fréquence haute et la fréquence basse. Une certaine variation autour de cette valeur optimale est possible sans que les performances n'en soient trop affectées. On évitera cependant d'avoir un nombre N d'accès regroupés supérieur à deux fois le rapport des fréquences et inférieur à la moitié du rapport des fréquences.

L'organisation des regroupements des accès à la fréquence basse des cellules rayonnantes n'est pas nécessairement réalisée selon un carré. Elle peut être ajustée, en fonction de la forme du panneau rayonnant, du rapport des bandes de fréquence, ou de la contrainte de domaine de balayage propre à chaque radar. La forme choisie peut alors être n'importe quel polygone (rectangle, triangle, étoile), ou autre forme, régulièrement répartie sur la surface du panneau rayonnant.

La figure 4b présente un deuxième mode de réalisation d'un réseau de combineurs selon l'invention, dans lequel les accès à la fréquence basse des éléments rayonnants sont rassemblés par paquets de huit accès A₁ à A₈ dans un combineur de taille 8 vers 1, huit étant la puissance de deux la plus proche du rapport entre les bandes de fréquences. Les accès sont rassemblés par rectangles d'accès adjacents, de longueur 4 et de largeur 2. Alternativement, les entrées peuvent être regroupées au sein de trois étages de combineurs 2 vers 1 cascadés.

Un radar utilisant un tel panneau rayonnant dispose d'un réseau légèrement sur-échantillonné dans le plan horizontal, et légèrement sous-échantillonné dans le plan vertical, par rapport au cas optimal présenté dans la figure 4a. Ainsi, la largeur angulaire dans laquelle le radar peut balayer est augmentée dans le plan horizontal, et réduite dans le plan vertical. Ce fonctionnement est adapté pour certaines applications, comme par exemple les applications IFF, pour lesquels la zone angulaire parcourue par le radar dans le plan horizontal est plus importante que celle parcourue dans le plan vertical.

Le panneau d'antenne selon l'invention peut avantageusement se présenter sous la forme d'un circuit hyperfréquences multicouches, comprenant :
- une face supérieure rayonnante, dans laquelle des cellules rayonnantes bi-bande sont réparties selon une maille adaptée au fonctionnement à la fréquence haute,
- une couche interne composée de combineurs hyperfréquence couvrant l'ensemble de la surface de la face rayonnante, chaque combineur étant relié à l'accès à la fréquence basse d'au moins une cellule rayonnante de la face supérieure,
- une face arrière sous la forme d'un panneau de connecteurs permettant d'acheminer les signaux entre les accès à la fréquence haute de chacune des cellules rayonnantes ou les accès du réseau de combineurs, et le droit des connecteurs de boîtiers des équipements radars.

La face arrière du panneau de conducteur permet d'organiser la disposition des accès aux différentes mailles du panneau d'antenne, pour les rendre compatibles de l'interface avec les équipements radio auxquels il est relié. Cette face comprend donc des connecteurs associés à la bande de fréquence haute reliés par des lignes, gravées sur l'une des couches du circuit multicouches composant le panneau rayonnant, aux différents accès à la bande basse de chacune des cellules rayonnantes. Il comprend également des connecteurs associés à la bande de fréquence basse, reliés par des lignes gravées sur l'une des couches du circuit multicouches composant le panneau rayonnant aux accès aux différents combineurs du réseau de combineurs.

La longueur des lignes est maitrisée, de manière à ne pas générer de déphasages entre les accès.

L'invention permet ainsi la cohabitation entre deux réseaux rayonnants au sein d'un même panneau d'antenne, sans perturbation d'un réseau par l'autre. Elle permet également l'aménagement des interfaces de ce panneau antennaire, afin de permettre une connexion facilitée avec les modules d'émission/réception dans la bande de fréquence haute et dans la bande de fréquence basse des radars.

La partie hyperfréquence des radars se présente généralement sous la forme de structures d'accueil, ou racks, qui sont des structures mécaniques porteuses comprenant entre autre une alimentation et venant se connecter à l'arrière du panneau antennaire. Dans ces structures d'accueil viennent s'insérer des boîtiers, ou cartes, contenant chacun une pluralité de modules d'émission/réception. Chacun des modules d'émission/réception est lui-même connecté à une entrée/sortie différente du panneau antennaire.

L'utilisation de boîtiers, comprenant un nombre limité de modules, permet de simplifier la réalisation, l'installation et la maintenance des équipements. Les boîtiers sont des éléments standardisés, qui en cas de panne peuvent être remplacés sans nécessiter le remplacement de l'ensemble de la structure d'accueil. Ils offrent de la flexibilité de par leur capacité de réutilisation, et permettent de réduire les coûts de fabrication et d'exploitation des radars.

Dans l'état actuel de l'art, les structures d'accueil et les boîtiers qui les composent sont particularisés par rapport à la bande de fréquence dans laquelle ils fonctionnent. Leurs dimensions, et le nombre de voies qu'ils regroupent sont dépendants de leur bande de fréquence de fonctionnement.

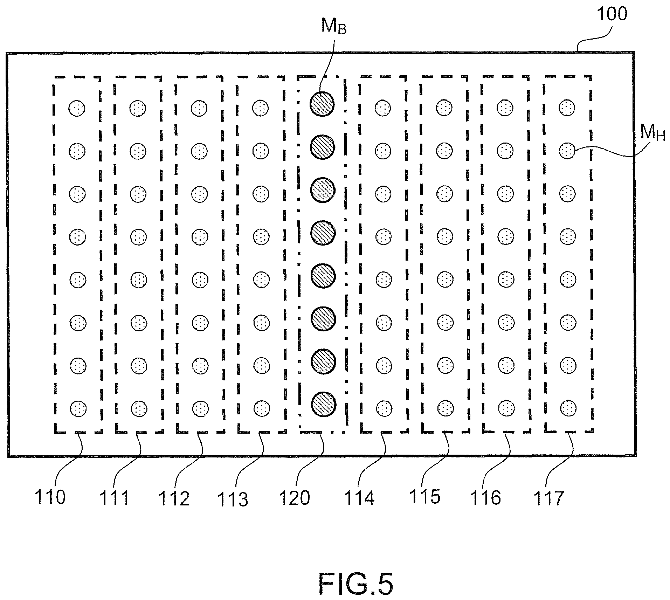

L'invention comprend également alors une structure d'accueil bi-bande permettant de piloter le panneau antennaire bi-bande décrit précédemment, embarquant conjointement des boîtiers dédiés au fonctionnement en bande de fréquences haute et des boitiers dédiés au fonctionnement en bande de fréquences basse. La figure 5 présente un exemple de structure d'accueil associée à un mode de réalisation d'une antenne selon l'invention.

Dans la figure 5, la structure d'accueil 100 comprend une pluralité de boitiers 110 à 117 associés au fonctionnement en bande de fréquence haute. Chacun de ces boîtiers comprend des modules d'émission/réception M_{H} destinés à être reliés aux différents accès à la maille fréquence haute de l'antenne.

Il comprend également un ou plusieurs boitiers 120 associés au fonctionnement en bande de fréquence basse. Chacun de ces boîtiers comprend des modules d'émission/réception M_{B} destinés à être reliés aux combineurs de la maille fréquence basse de l'antenne.

Ainsi, les modules M_{H} peuvent accéder et piloter les éléments fréquence haute de chacune des cellules rayonnantes du panneau. Les modules M_{B} peuvent accéder et piloter le réseau de combineurs et donc des groupes d'accès à la fréquence basse des cellules rayonnantes du panneau.

Enfin, l'invention comprend une antenne radar utilisant un panneau d'antenne bi-bande comprenant une unique surface rayonnante selon l'invention, reliée à une structure d'accueil bi-bande comprenant des boitiers intégrant des modules d'émission réception raccordés à des éléments rayonnants de chacune des bandes de fréquences.

L'invention permet donc de loger deux réseaux rayonnants fonctionnant à des fréquences différentes dans une même surface rayonnante, tout en résolvant les phénomènes de remontées de lobes liés à la périodicité des éléments du réseau. L'intégration du panneau rayonnant selon l'invention dans des équipements radars existant ne nécessite que peu de modifications. Suivant la configuration donnée à la face arrière du panneau d'antenne, celle-ci peut être reliée à deux structures d'accueil distinctes telles que celles existantes, ou reliée à une même structure d'accueil bi-bande, réalisée en insérant dans une même structure d'accueil des boîtiers modulaires préexistants dédiés à l'une et l'autre des bandes de fréquences de fonctionnement.

## Revendications

1. Panneau d'antenne bi-bande comprenant une pluralité de cellules rayonnantes bi-bandes (HB₁), chacune des cellules fonctionnant de manière indépendante pour une première fréquence dans une première bande de fréquence et une deuxième fréquence dans une deuxième bande de fréquence, la première bande de fréquences étant plus haute que la deuxième bande de fréquences, chacune desdites cellules rayonnantes présentant un accès distinct à la première et à la deuxième fréquence, le panneau d'antenne étant **caractérisé en ce que** les cellules rayonnantes sont disposées selon une maille dimensionnée par rapport à la première bande de fréquences, et **en ce que** les accès (A₁ à A₉) vers la deuxième fréquence des cellules rayonnantes sont rassemblés par paquets au sein de combineurs (C₁) ayant chacun un accès unique.

2. Panneau d'antenne bi-bande selon la revendication précédente, dans lequel lesdites cellules rayonnantes (HB₁) comprennent un élément rayonnant dimensionné pour rayonner dans la première bande de fréquence associé à un élément de filtrage de la deuxième bande de fréquence, et un élément rayonnant dimensionné pour rayonner dans la deuxième bande de fréquence associé à un élément de filtrage de la première bande de fréquence.

3. Panneau d'antenne bi-bande selon l'une des revendications précédentes, dans lequel l'ensemble des cellules rayonnantes sont identiques.

4. Panneau d'antenne bi-bande selon l'une des revendications précédentes, dans lequel chaque maille du panneau rayonnant a un pas de taille sensiblement égale à λ_{H}/2, λ_{H} étant une longueur d'onde associée à la fréquence maximale de la première bande de fréquences.

5. Panneau d'antenne bi-bande selon l'une des revendications précédentes, dans lequel le nombre d'accès vers la deuxième fréquence des cellules rayonnantes rassemblés au sein d'un combineur est un entier proche du rapport entre la première fréquence et la deuxième fréquence.

6. Panneau d'antenne bi-bande selon l'une des revendications précédentes, dans lequel le nombre d'accès vers la deuxième fréquence des cellules rayonnante rassemblés au sein d'un combineur est un entier sensiblement égal à la puissance de deux la plus proche du rapport entre la première fréquence et la deuxième fréquence.

7. Panneau d'antenne bi-bande selon l'une des revendications précédentes, dans lequel les accès vers la deuxième fréquence des cellules rayonnante rassemblés au sein d'un combineur sont des accès adjacents formant des polygones réguliers.

8. Panneau d'antenne bi-bande selon l'une des revendications précédentes, ledit panneau d'antenne bi-bande étant un circuit multicouches comprenant :
• une face supérieure comprenant la pluralité de cellules rayonnantes (HB₁),
• une couche interne comprenant un réseau de combineurs (C₁) reliés à des accès à la deuxième bande de fréquence des cellules rayonnantes,
• une face arrière comprenant un réseau de connecteurs,
• des lignes reliant l'accès à chacun des combineurs du réseau de combineurs à un connecteur associé à la deuxième bande de fréquence du réseau de connecteurs, et
• des lignes reliant l'accès à la première bande de fréquence des cellules rayonnantes à un connecteur associé à la première bande de fréquence du réseau de connecteurs.

9. Panneau d'antenne bi-bande selon l'une des revendications précédentes, dans lequel la première bande de fréquence comprend la bande 2.9GHz - 3.3GHz, et la deuxième bande de fréquence est centrée autour d'une fréquence choisie parmi la fréquence 1030MHz et la fréquence 1090MHz.

10. Panneau d'antenne bi-bande selon l'une des revendications 1 à 8, dans lequel la première bande de fréquence comprend la bande 2.9GHz - 3.3GHz, et la deuxième bande de fréquence comprend au moins la fréquence 1030MHz et la fréquence 1090MHz.

11. Structure bi-bande d'accueil d'un panneau d'antenne **caractérisée en ce qu'**elle est configurée pour accueillir un panneau d'antenne bi-bande selon l'une des revendications précédentes, et **en ce qu'**elle comprend une pluralité de modules d'émission réception (M_{H}) associés à la première bande de fréquence, et une pluralité de modules d'émission réception (M_{B}) associés à la deuxième bande de fréquence.

12. Antenne radar bi-bande **caractérisée en ce qu'**elle comprend un panneau d'antenne bi-bande selon l'une des revendications 1 à 10, et une structure bi-bande d'accueil selon la revendication 11, ladite structure bi-bande d'accueil étant reliée audit panneau d'antenne.
